# EUROPÄISCHE PATENTSCHRIFT

(11) **EP 3 358 687 B1**
(45) Veröffentlichungstag und Bekanntmachung des Hinweises auf die Patenterteilung: **30.08.2023**
(21) Anmeldenummer: 17305117.8
(22) Anmeldetag: 01.02.2017
(51) Int. Cl.: H02B 1/32, H02B 1/42, H02B 1/06, H02G 3/08

(54) **TRENNVORRICHTUNG FÜR EINEN VERTEILERSCHRANK UND VERTEILERSCHRANK UMFASSEND EINE SOLCHE TRENNVORRICHTUNG**
PARTITIONING DEVICE FOR A DISTRIBUTION CABINET AND DISTRIBUTION CABINET COMPRISING SUCH A PARTITIONING DEVICE
DISPOSITIF DE SÉPARATION POUR UN COFFRET DE DISTRIBUTION ET COFFRET DE DISTRIBUTION COMPRENANT UN TEL DISPOSITIF DE SÉPARATION

(43) Veröffentlichungstag der Anmeldung: 08.08.2018
(73) Patentinhaber: Hager Electro GmbH & Co. KG, 66440 Blieskastel (DE)
(72) Erfinder: ALTMEIER, Philippe, 66740 Saarlouis (DE); DISSEL, Klaus, 66663 Merzig (DE); GERSTNER-RIEWER, Florian, 66333 Völklingen (DE); GROS, Bernhard, 66459 Kerkel-Neuhäusel (DE); KARMANN, Uwe, 66271 Kleinblittersdorf (DE)
(74) Vertreter: Cabinet Nuss

(56) Entgegenhaltungen:
- EP-A1- 2 573 886
- DE-U- 1 890 657
- FR-A1- 2 957 198
- US-B1- 8 885 328

## Beschreibung

Die Erfindung betrifft eine Trennvorrichtung für einen Verteilerschrank zur räumlichen und elektrischen Trennung eines Verteilungsraums des Verteilerschranks von einem Kommunikationsraum des Verteilerschranks sowie einen Verteilerschrank umfassend eine solche Trennvorrichtung. Vorzugsweise ist der Verteilerschrank ein Verteilerschrank gemäß der Norm DIN 43871 in ihrer Version vom November 1992, weiterhin vorzugsweise ein Verteilerschrank der Schutzklasse 2 nach der Schutzart IP 30 gemäß der Norm DIN 60529 in ihrer Version vom August 2013.

Ein solcher Verteilerschrank umfasst eine Rückwand, eine erste Seitenwand, eine gegenüberliegend von der ersten Seitenwand angeordnete zweite Seitenwand, eine dritte Seitenwand, eine gegenüberliegend von der dritten Seitenwand angeordnete vierte Seitenwand, eine Schranköffnung sowie eine Tür zum Schließen der Schranköffnung.

Der Verteilerschrank ist in eine in eine Wand oder Wandung eingebrachte Öffnung einbaubar. Vorzugsweise ist ein Randbereich des Verteilerschranks in einer Einbauposition des Verteilerschranks an einen Bereich der Wand oder Wandung anlegbar, der die Öffnung umgibt.

Die Schranköffnung ist vorzugsweise durch den Randbereich umgeben. Der Randbereich kann derart ausgestaltet sein, dass dieser eine Schranköffnung mit einer ersten Breite und einer ersten Höhe definiert. Der Randbereich kann eine zweite Höhe und eine zweite Breite aufweisen, wobei vorzugsweise die erste Breite kleiner ist als die zweite Breite und die erste Höhe kleiner ist als die zweite Höhe. Dabei definieren die zweite Höhe und die zweite Breite zugleich die Außenmaße des Verteilerschranks
Solche Verteilerschränke werden - neben Geräten zur Verteilung der elektrischen Energie im Bereich des Niederspannungsnetzes - häufig auch zur Unterbringung elektrischer Geräte verwendet, die keine Funktion zur Verteilung von elektrischer Energie im Bereich des Niederspannungsnetzes eines Haushalts erfüllen. Zweckmäßig ist jedoch ein Verteilungsraum, in welchem die elektrischen Geräte zur Verteilung der elektrischen Energie im Bereich des Niederspannungsnetzes angeordnet sind, die beispielsweise vor unbefugtem Zugriff gesondert zu schützen sind, von einem Kommunikationsraum, auch Multimediaraum genannt, in welchem Geräte angeordnet sind, die keine Funktion im Bereich der Verteilung der elektrischen Energie erfüllen und die beispielsweise für einen Benutzer zugänglich bleiben müssen, wie zum Beispiel Multimediageräte oder Kommunikationsgeräte, räumlich und elektrisch voneinander zu trennen.

Aus FR 2 957 198 A1 ist ein Verteilerschrank für Telekommunikationsgeräte bekannt. In einem unteren Teil des Verteilerschranks ist eine Steckerleiste angeordnet, die dazu dient, in dem Verteilerschrank angeordnete Telekommunikationsgeräte mit Spannung zu versorgen. Die Steckerleiste ist fest mit einer Rückwand des Verteilerschranks verbunden.

Aus EP 2 573 886 A1 ist ein Verteilerschrank bekannt, in welchem elektrische Geräte, die mit Spannungen oberhalb von 50 V betrieben werden, mittels einer Abdeckung von den übrigen Komponenten des Verteilerschranks räumlich getrennt werden.

Aus DE 1 890 657 U ist ein Rangierverteiler bekannt, der mittels Trennwände in unterschiedliche Zonen aufgeteilt ist.

Es ist die Aufgabe der vorliegenden Erfindung, eine Trennvorrichtung für einen Verteilerschrank vorzuschlagen, der zur räumlichen und elektrischen Trennung des Verteilungsraums des Verteilerschranks von dem Kommunikationsraum des Verteilerschranks ermöglicht. Insbesondere ist es die Aufgabe der vorliegenden Erfindung, eine Trennvorrichtung vorzuschlagen, die in bereits vorhandene Verteilerschränke, insbesondere Verteilerschränke nach der DIN 43871 in ihrer Version vom November 1992, verwendet werden kann. Weiterhin ist es die Aufgabe der vorliegenden Erfindung, eine Trennvorrichtung bereit zu stellen, die sich in einfacher Weise derart in dem Verteilerschrank anordnen lässt, dass sich das Volumen des Kommunikationsraums und des Verteilungsraums für den jeweiligen Verteilerschrank nach Bedarf auswählen lässt. Eine weitere Aufgabe der vorliegenden Erfindung ist es, eine Trennvorrichtung vorzuschlagen, die eine variable Anordnung des Verteilungsraums und des Kommunikationsraums innerhalb des Verteilerschranks ermöglicht.

Diese Aufgabe wird durch die in Anspruch 1 angegebene Trennvorrichtung gelöst. Vorteilhafte Ausgestaltungen und Weiterentwicklungen sind in den abhängigen Ansprüchen angegeben.

Die Trennvorrichtung für einen Verteilerschrank zur räumlichen und elektrischen Trennung eines Verteilungsraums des Verteilerschranks von einem Kommunikationsraum des Verteilerschranks umfasst wenigstens einen Befestigungsabschnitt, der geeignet ist, an einem Abschnitt des Verteilerschranks befestigt zu werden, und einen Hauptabschnitt, der mit dem wenigstens einem Befestigungsabschnitt verbunden ist. Die Trennvorrichtung ist geeignet, derart in dem Verteilerschrank angeordnet zu werden, dass sich die Trennvorrichtung von einer ersten Seitenwand des Verteilerschranks zu einer gegenüberliegend von der ersten Seitenwand angeordneten zweiten Seitenwand des Verteilerschranks erstreckt, um den Verteilungsraum von dem Kommunikationsraum räumlich zu trennen. Erfindungsgemäß ist der Hauptabschnitt lösbar mit dem wenigstens einen Befestigungsabschnitt verbunden, und der wenigstens eine Befestigungsabschnitt, ist dazu geeignet, in einem benachbart zu einer Seitenwand des Verteilerschranks angeordneten Verkabelungsraum des Verteilerschranks angeordnet und an einem Hutprofilbefestigungsabschnitt des Verteilerschranks befestigt zu werden. Dabei umfasst der wenigstens eine Befestigungsabschnitt einen Vorsprung, der in eine Vertiefung des Hutprofilbefestigungsabschnitts einrastbar ist, um den wenigsten einen Befestigungsabschnitt mit dem Hutprofilbefestigungsabschnitt zu verbinden.

Die Erfindung ermöglicht eine einfache und variable Aufteilung eines Verteilerschranks in einem Kommunikationsraum und einem Verteilungsraum, ein einfaches Verbinden des Befestigungsabschnitts beziehungsweise der Trennvorrichtung in dem Verteilerkasten, eine sichere Trennung des Verteilungsraums von dem Kommunikationsraum, und ermöglicht einen einfachen Zugang zum Verteilungsraum durch einen Installateur.

In einer nicht beanspruchten Alternative kann der Befestigungsabschnitt geeignet sein, an der Rückwand und/oder einer Seitenwand, das heißt die erste Seitenwand, die zweite Seitenwand, die dritte Seitenwand und/oder die vierte Seitenwand, des Verteilerschranks befestigt zu werden.

Vorzugsweise ist der Hauptabschnitt mit dem wenigstens einen Befestigungsabschnitt mittels einer formschlüssigen und/oder kraftschlüssigen Verbindung verbunden.

Diese Ausgestaltung ermöglicht eine einfache und sichere Befestigung des Hauptabschnitts an dem wenigstens einen Befestigungsabschnitt.

In einer bevorzugten Ausgestaltung ist der der Hauptabschnitt mit dem wenigstens einen Befestigungsabschnitt mittels einer Clipsverbindung und/oder Schraubverbindung verbunden.

Diese Ausgestaltung ermöglicht eine einfache und/oder beständige Verbindung des Hauptabschnitts mit dem wenigstens einen Befestigungsabschnitt.

In einer nicht beanspruchten alternativen Ausgestaltung kann der wenigstens eine Befestigungsabschnitt fest mit dem Hauptabschnitt verbunden sein, vorzugsweise einstückig hergestellt sein.

In einer bevorzugten Ausgestaltung umfasst der Hauptabschnitt zur elektrischen Versorgung eines in dem Kommunikationsraum angeordneten elektrischen Geräts wenigstens eine Steckdosenvorrichtung, wobei vorzugsweise die Steckdosenvorrichtung von dem Kommunikationsraum her zugänglich ist.

Diese Ausgestaltung ermöglicht es in einfacher Weise eine Stromversorgung für die in dem Kommunikationsraum angeordneten Geräte bereit zu stellen.

Vorzugsweise umfasst die Steckdosenvorrichtung einen Berührungsschutz.

Vorzugsweise erstreckt sich der Verkabelungsraum im Wesentlichen parallel und/oder entlang der ersten Seitenwand und/oder der zweiten Seitenwand und/oder der dritten Seitenwand und/oder der vierten Seitenwand.

In einer bevorzugten Ausgestaltung ist der Hauptabschnitt in einer annähernd quer zu einer Rückwand des Verteilerschranks verlaufenden Löserichtung von dem wenigstens einen Befestigungsabschnitt lösbar.

Diese Ausgestaltung ermöglicht ein einfaches und sicheres Lösen des Hauptabschnitts von dem wenigstens einen Befestigungsabschnitt.

In einer bevorzugten Ausgestaltung ermöglicht die Trennvorrichtung derart eine Trennung des Verteilungsraums von dem Kommunikationsraum, dass ein Zugang des Verteilungsraums durch ein Werkzeug und/oder ein Zugang des Verteilungsraums durch einen Finger einer Person verhindert wird, vorzugsweise ein Zugang des Verteilungsraums durch ein Werkzeug gemäß der Norm IP30 und/oder ein Zugang des Verteilungsraums durch einen Finger einer Person gemäß der Norm IP20 verhindert wird.

Diese Ausgestaltung ermöglicht es beispielsweise einen Benutzer, der die Installation eines Kommunikationsgerätes in dem Kommunikationsraum durchführt, vor einem durch ein in dem Verteilungsraum angeordneten Geräts verursachten Stromschlag zu schützen.

In einer bevorzugten Ausgestaltung weist der wenigstens eine Befestigungsabschnitt eine Öffnung auf, in welche eine mit einer Gewindebohrung des Hutprofilschienenbefestigungsabschnitts verbundene Schraube angeordnet werden kann, um den wenigstens einen Befestigungsabschnitt mit dem Hutprofilschienenbefestigungsabschnitt zu verbinden, vorzugsweise form- und kraftschlüssig zu verbinden.

Diese Ausgestaltung ermöglicht eine einfache und sichere Fixierung des Befestigungsabschnitts beziehungsweise der Trennvorrichtung in dem Verteilerschrank.

Vorzugsweise umfasst die Trennvorrichtung wenigstens einen Führungssteg und wenigstens einen Führungseinschnitt, in welchem der Führungssteg angeordnet ist, wobei entweder der Führungssteg an dem wenigstens einen Befestigungsabschnitt und der Führungseinschnitt an dem Hauptabschnitt oder der Führungseinschnitt an dem wenigstens einen Befestigungsabschnitt und der Führungssteg an dem Hauptabschnitt angeordnet ist.

Diese Ausgestaltung ermöglicht ein einfaches Verbinden des Hauptabschnitts mit dem wenigstens einen Befestigungsabschnitt und ermöglicht es, den Hauptabschnitt in einer Befestigungsposition gegenüber dem wenigstens einen Befestigungsabschnitt zu positionieren.

In einer bevorzugten Ausgestaltung umfasst der wenigstens eine Befestigungsabschnitt einen Anschlagabschnitt, der an einer sich im Wesentlichen quer zu einer Rückwand des Verteilerschranks erstreckenden Wandung des Hutprofilschienenbefestigungsabschnitts anlegbar ist.

Diese Ausgestaltung ermöglicht ein einfaches und sicheres Positionieren des Befestigungsabschnitts der Trennvorrichtung an dem Hutprofilschienenbefestigungsabschnitt des Verteilerschranks.

Vorzugsweise umfasst die Trennvorrichtung wenigstens eine Führungsnut und wenigstens eine Führungsfeder, welche in der Führungsnut angeordnet ist, wobei entweder die Führungsnut an dem wenigstens einen Befestigungsabschnitt und die Führungsfeder an dem Hauptabschnitt oder die Führungsfeder an dem wenigstens einen Befestigungsabschnitt und die Führungsnut an dem Hauptabschnitt angeordnet ist.

Diese Ausgestaltung ermöglicht ein Zentrieren oder ein Ausrichten des Hauptabschnitts gegenüber des wenigstens einen Befestigungsabschnitts, um den Hauptabschnitt in einfacher und sicherer Weise in die Befestigungsposition zu überführen.

In einer bevorzugten Ausgestaltung umfasst die Führungsfeder wenigstens eine erste Führungsfläche und die Führungsnut wenigstens zweite Führungsfläche, wobei sich die erste Führungsfläche und die zweite Führungsfläche Wesentlichen in einer parallel zur Löserichtung verlaufenden Richtung erstrecken.

Diese Ausgestaltung ermöglicht ein Zentrieren oder ein Ausrichten des Hauptabschnitts gegenüber des wenigstens einen Befestigungsabschnitts, um den Hauptabschnitt in einfacher und sicherer Weise in die Befestigungsposition zu überführen.

Vorzugsweise umfasst die Trennvorrichtung wenigstens eine erste Führungskante und wenigstens eine zweite Führungskante, welche an der ersten Führungskante anliegt, wobei entweder die erste Führungskante an dem wenigstens einen Befestigungsabschnitt und die zweite Führungskante an dem Hauptabschnitt oder die zweite Führungskante an dem wenigstens einen Befestigungsabschnitt und die erste Führungskante an dem Hauptabschnitt angeordnet ist, wobei vorzugsweise die erste Führungskante und die zweite Führungskante gekrümmt, weiterhin vorzugsweise im Wesentlichen parabolisch verlaufen.

In einer bevorzugten Ausgestaltung ist die Trennvorrichtung im Wesentlichen spiegelsymmetrisch ausgebildet.

Diese Ausgestaltung ermöglicht es, die Trennvorrichtung um eine orthogonal zur Rückwand des Verteilerkastens verlaufende Achse um 180° verdreht anzuordnen, um die relative Positionierung des Verteilungsraums bezüglich des Kommunikationsraums umzukehren.

Vorzugsweise weist die Trennvorrichtung eine Länge auf, die im Wesentlichen einer Breite eines Innenraums des Verteilerschranks gleicht.

Diese Ausgestaltung ermöglicht eine Abgrenzung beziehungsweise eine Trennung bezüglich der Vertikalen in dem Verteilerschrank.

In einer bevorzugten Ausgestaltung umfasst die Trennvorrichtung eine Plombiereinrichtung zur Plombierung einer Verteilungsraumabdeckung des Verteilerschranks.

Diese Ausgestaltung ermöglicht es, den Verteilungsraum vor unbefugtem Zugriff zu schützen.

Die Erfindung betrifft ferner einen Verteilerschrank für eine Elektroinstallation umfassend eine erfindungsgemäße Trennvorrichtung, eine erste Seitenwand, eine gegenüberliegend von der ersten Seitenwand angeordnete zweite Seitenwand und wenigstens einen Hutprofilschienenbefestigungsabschnitt, wobei der wenigstens eine Befestigungsabschnitt an dem Hutprofilschienenbefestigungsabschnitt befestigt ist, wobei die Trennvorrichtung derart in dem Verteilerschrank angeordnet ist, dass sich die Trennvorrichtung von der ersten Seitenwand des Verteilerschranks zu der zweiten Seitenwand des Verteilerschranks erstreckt, um den Verteilungsraum von dem Kommunikationsraum räumlich zu trennen.

Einzelheiten und weitere Vorteile der erfindungsgemäßen Trennvorrichtung und des erfindungsgemäßen Verteilerkastens werden anhand des nachfolgend beschriebenen Ausführungsbeispiels erläutert. Dabei veranschaulichen im Einzelnen:
Figur 1 zeigt eine perspektivische Ansicht eines Verteilerkastens nach einem Ausführungsbeispiel;
Figuren 2A bis 2F zeigen jeweils einen Verteilerkasten nach dem Ausführungsbeispiel mit einer Trennvorrichtung nach dem Ausführungsbeispiel zur räumlichen Aufteilung eines Innenraums des Verteilerkastens in einem Kommunikationsraum und einem Verteilungsraum;
Figur 3 zeigt einen Ausschnitt einer perspektivischen Ansicht der in dem Verteilerkasten angeordneten Trennvorrichtung nach dem Ausführungsbeispiel;
Figur 4 zeigt einen weiteren Ausschnitt einer perspektivischen Ansicht der in dem Verteilerkasten angeordneten Trennvorrichtung nach dem Ausführungsbeispiel;
Figur 5 zeigt einen Ausschnitt einer perspektivischen Ansicht des Verteilerkastens mit einem Befestigungsabschnitt der Trennvorrichtung nach dem Ausführungsbeispiel;
Figur 6 zeigt einen weiteren Ausschnitt einer perspektivischen Ansicht des Verteilerkastens mit einem Befestigungsabschnitt der Trennvorrichtung nach dem Ausführungsbeispiel;
Figur 7 zeigt einen Ausschnitt einer perspektivischen Ansicht eines Hauptabschnitts der Trennvorrichtung nach dem Ausführungsbeispiel; und
Figur 8 zeigt eine perspektivische Ansicht des Befestigungsabschnitts der Trennvorrichtung nach dem Ausführungsbeispiel.

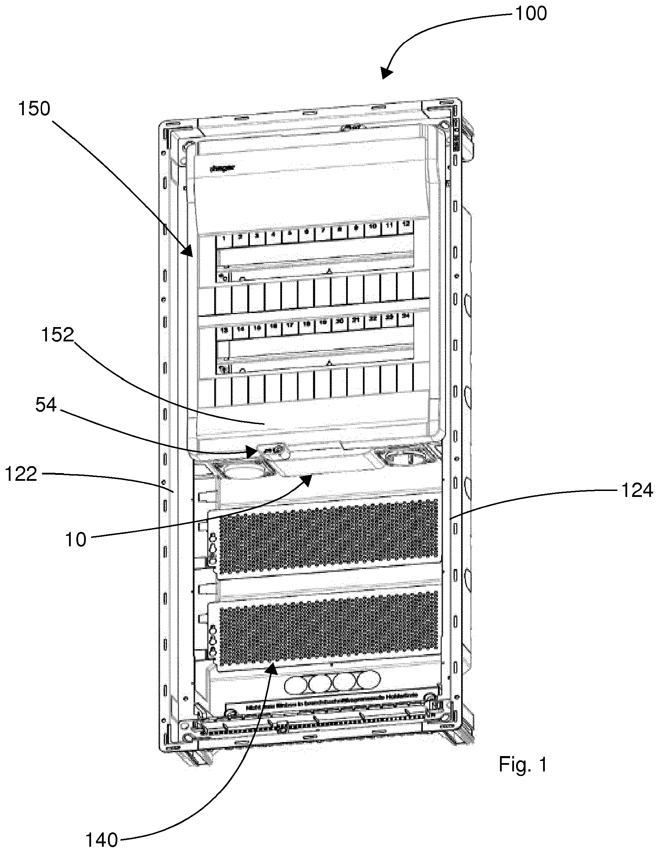

Die Figuren 1 bis 8 zeigen eine Trennvorrichtung 10 nach dem Ausführungsbeispiel. Die Trennvorrichtung 10 ist für einen Einbau in einem Verteilerschrank 100 geeignet und zur räumlichen und elektrischen Trennung eines Verteilungsraums 150 des Verteilerschranks 100 von einem Kommunikationsraum 140 des Verteilerschranks 100 vorgesehen.

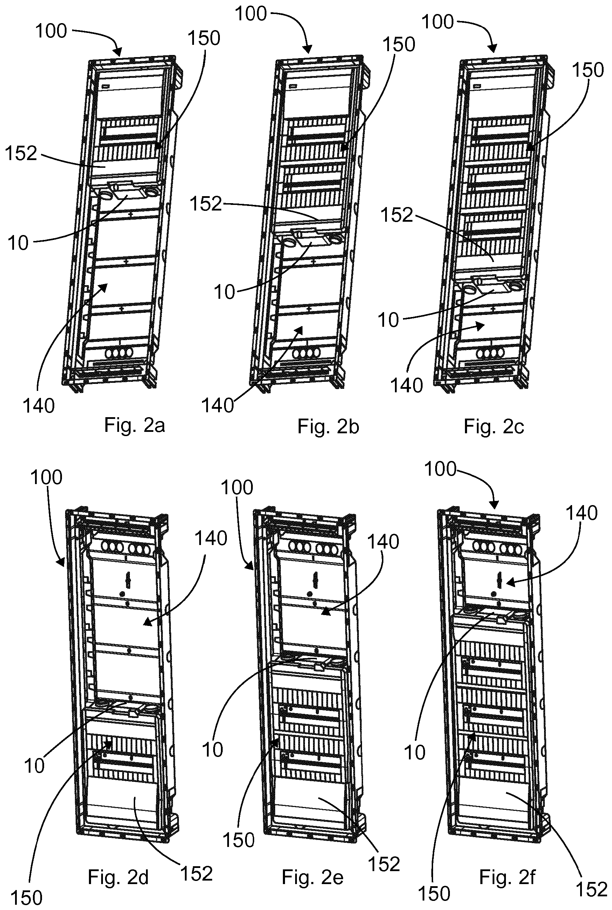

Die Trennvorrichtung 10 kann, wie in den Figuren 2A bis 2F zu erkennen ist, an unterschiedlichen Positionen innerhalb des Verteilerkastens 100 angeordnet werden, um die räumliche Trennung des Kommunikationsraums 140 von dem Verteilungsraum 150 zu erzielen. Dadurch kann der Verteilungsraum 150 und der Kommunikationsraum 140 je nach Bedarf in ihrem Volumen ausgebildet werden.

Vorzugsweise ist die Trennvorrichtung 10 im Wesentlichen spiegelsymmetrisch ausgebildet. Dadurch ist, wie insbesondere in den Figuren 2A bis 2F zu erkennen ist, beispielsweise der Kommunikationsraum 140 oberhalb des Verteilungsraums 150 im Verteilerschrank 100 anordenbar oder der Verteilungsraum 150 oberhalb des Kommunikationsraums 140 innerhalb des Verteilerschranks 100 anordenbar.

Die Trennvorrichtung 10 umfasst wenigstens einen Befestigungsabschnitt 20, welcher geeignet ist, an einem Abschnitt des Verteilerschranks 100 befestigt zu werden

Die Trennvorrichtung 10 umfasst ferner einen Hauptabschnitt 40, der mit dem wenigstens einen Befestigungsabschnitt 20 verbunden ist.

Der Hauptabschnitt 40 ist lösbar mit dem wenigstens einen Befestigungsabschnitt 20 verbunden. Alternativ oder zusätzlich kann der Hauptabschnitt 40 mit dem wenigstens einen Befestigungsabschnitt 20 mittels einer formschlüssigen und/oder kraftschlüssigen Verbindung verbunden sein.

Vorzugsweise ist der Hauptabschnitt 40 in einer annähernd quer zu der Rückwand 101 des Verteilerschranks 100 verlaufenden Löserichtung L von dem wenigstens einen Befestigungsabschnitt 20 beziehungsweise von den zwei Befestigungsabschnitten 20 lösbar.

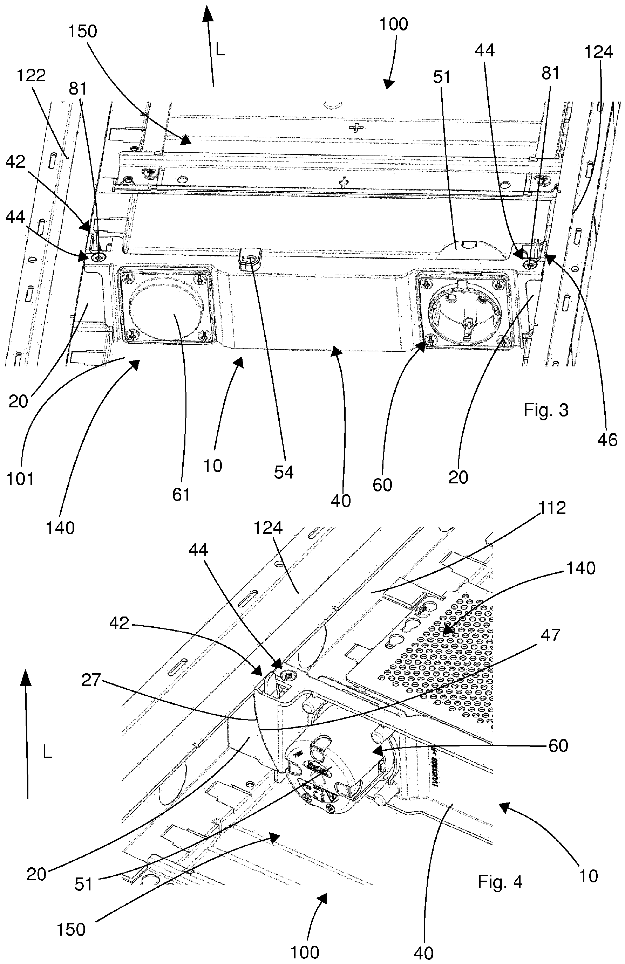

Vorzugsweise ist der Hauptabschnitt 40 mit dem wenigstens einen Befestigungsabschnitt 20 mittels einer Clipsverbindung 42 und/oder einer Schraubverbindung 44 verbunden. Diese Ausgestaltung wird insbesondere aus den Figuren 3, 4, 7 und 8 ersichtlich. Die Clipsverbindung 42 kann einerseits eine federnde Lasche 41, an welcher ein Rastvorsprung 43 angeordnet ist, umfassen, wobei der Rastvorsprung 43 geeignet ist, in einen Ausschnitt 23 einzurasten, wenn der Hauptabschnitt 40 mit dem wenigstens einen Befestigungsabschnitt 20 verbunden ist. Dabei kann die federnde Lasche 41 an dem Hauptabschnitt 40 und der Ausschnitt 23 an dem wenigstens einen Befestigungsabschnitt 20 angeordnet sein. Umgekehrt kann die federnde Lasche 41 auch an dem wenigstens einen Befestigungsabschnitt 20 und der Ausschnitt 23 an dem Hauptabschnitt 40 angeordnet sein. Vorzugsweise kann die federnde Lasche 41 mit einer Löseeinrichtung 45 versehen sein, mittels welcher ein Benutzer durch Anbringen eines Drucks auf diese den Rastvorsprung 43 aus dem Ausschnitt 23 hinaus bewegen kann, um den Hauptabschnitt 40 von dem wenigstens einen Befestigungsabschnitt 20 lösen zu können. Vorzugsweise erfolgt die Schraubverbindung 44 mittels einer Schraube 81, die weiterhin vorzugsweise von einer Oberseite 47 ` der Trennvorrichtung 10 her zugänglich ist.

Die Trennvorrichtung 10 ist geeignet, derart in dem Verteilerschrank 100 angeordnet zu werden, dass sich die Trennvorrichtung 10 von einer ersten Seitenwand 122 des Verteilerschranks zu einer gegenüberliegend von der ersten Seitenwand 122 angeordneten zweiten Seitenwand 124 des Verteilerschranks 100 erstreckt, um den Verteilungsraum 150 von dem Kommunikationsraum 140 elektrisch und räumlich zu trennen. Der Verteilerschrank 100 gemäß dem Ausführungsbeispiel umfasst die erste Seitenwand 122, die zweite Seitenwand 124, die gegenüberliegend von der ersten Seitenwand angeordnet ist, eine dritte Seitenwand 126 sowie eine vierte Seitenwand 128. Vorzugsweise erstrecken sich die erste Seitenwand 122 und die zweite Seitenwand 124 im Wesentlichen entlang einer vertikalen Richtung. Vorzugsweise erstrecken sich die dritte Seitenwand 126 und die vierte Seitenwand 128, die weiterhin vorzugsweise gegenüberliegend von der dritten Seitenwand 126 angeordnet ist, im Wesentlichen in einer horizontalen Richtung. Alternativ können sich die erste Seitenwand 122 und die zweite Seitenwand 124 im Wesentlichen in einer horizontalen Richtung erstrecken und die dritte Seitenwand 126 sowie die vierte Seitenwand 128 in einer vertikalen Richtung erstrecken. Die vertikale Richtung und die horizontale Richtung sind bezügliche einer bestimmungsgemäßen Einbauposition des Verteilerschranks definiert.

Verteilerschränke 100, insbesondere Verteilerschränke 100 nach der Norm DIN 43871 in ihrer Fassung vom November 1992, weisen in der Regel einen oder mehrere Hutprofilschienenbefestigungsabschnitte 114 auf, die für die Befestigung von Hutprofilschienen vorgesehen sind, auf welchen elektrische Geräte, insbesondere elektrische Geräte für die Verteilung elektrischer Energie befestigt werden können.

Der Befestigungsabschnitt 20 ist geeignet, an einem Hutprofilschienenbefestigungsabschnitt 114 des Verteilerschranks 100 befestigt zu werden.

In einer nicht beanspruchten Alternative kann der Befestigungsabschnitt geeignet sein, an der Rückwand 101 und/oder einer Seitenwand 122, 124, 126, 128, das heißt die erste Seitenwand 122, die zweite Seitenwand 124, die dritte Seitenwand 126 und/oder die vierte Seitenwand 128, des Verteilerschranks 100 befestigt zu werden.

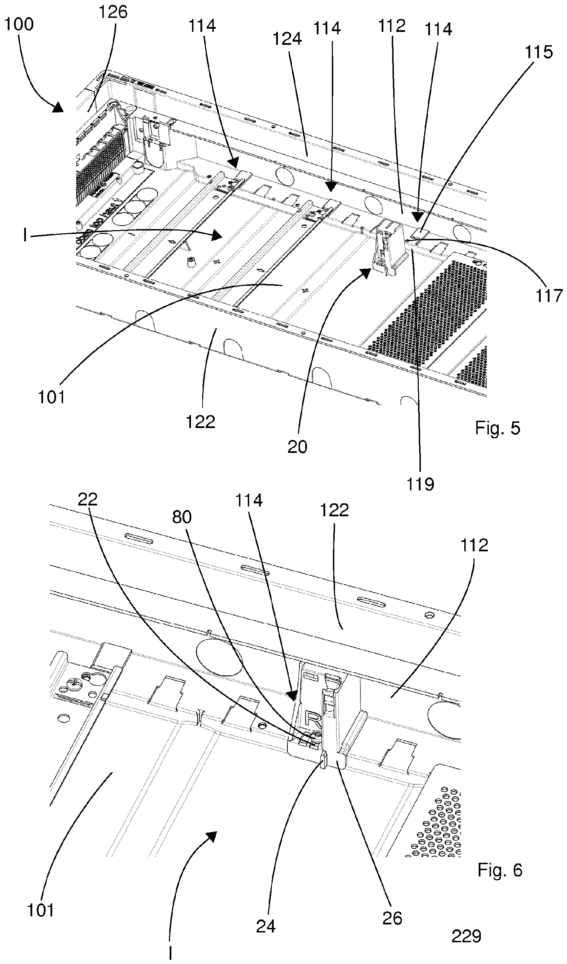

Der wenigstens eine Befestigungsabschnitt 20 umfasst einen Vorsprung, der in eine Vertiefung 115 des Hutprofilschienenbefestigungsabschnitts 114 einrastbar ist, um den wenigstens einen Befestigungsabschnitt 20 mit dem Hutprofilschienenbefestigungsabschnitt 114 zu verbinden. Gemäß einer bevorzugten Ausgestaltung weist der Befestigungsabschnitt 20 wenigstens eine Öffnung 22' auf, in welche eine mit einer Gewindebohrung 117 des Hutprofilschienenbefestigungsabschnitts 114 verbundene Schraube 80 angeordnet werden kann, um den wenigstens einen Befestigungsabschnitt 20 mit dem Hutprofilschienenbefestigungsabschnitt 114 zu verbinden, vorzugsweise form- und kraftschlüssig zu verbinden. Alternativ oder zusätzlich kann der wenigstens eine Befestigungsabschnitt 20 einen Anschlagabschnitt 26 umfassen, der an einer sich im Wesentlichen quer zu einer Rückwand 101 des Verteilerschranks 100 erstreckenden Wandung 119 des Hutprofilschienenbefestigungsabschnitts 114 anlegbar ist. Diese bevorzugten Ausgestaltungen werden insbesondere aus Figur 6 ersichtlich.

In einer bevorzugten Ausgestaltung kann der Hauptabschnitt 40 zur elektrischen Versorgung eines im dem Kommunikationsraum 140 angeordneten elektrischen Geräts wenigstens eine Steckdosenvorrichtung 60 umfassen. Vorzugsweise ist dabei die Steckdosenvorrichtung 60 von dem Kommunikationsraum 41 her zugänglich. In dem Hauptabschnitt 40 kann eine Montageöffnung 50 vorgesehen sein, in welche die Steckdosenvorrichtung 60 angeordnet ist. Die Steckdosenvorrichtung 60 kann dabei in der Montageöffnung 50 beispielsweise mittels vierer Schrauben befestigt werden. Alternativ kann die Montageöffnung 50 mittels eines Deckels 61 verschlossen werden, insbesondere dann, wenn keine Steckdosenvorrichtung 60 für die Montage in diese Montageöffnung 50 vorgesehen ist.

Der Hauptabschnitt 40 kann gemäß einer bevorzugten Ausgestaltung mit einem Berührungsschutz 51 für die Steckdosenvorrichtung 60 versehen sein, der einen Benutzer vor Stromschlägen schützt. Der Berührungsschutz 51 kann bezüglich einer Einsteckrichtung eines Steckers in die Steckdosenvorrichtung 60 hinter der Steckdosenvorrichtung 60 angeordnet sein Ferner kann der Berührungsschutz 51 ausgebildet sein, die stromführenden Bestandteile der Steckdosenvorrichtung 60 abzudecken.

Wie insbesondere Figur 3 zu erkennen gibt, kann die Trennvorrichtung 10 nach dem Ausführungsbeispiel mit zwei Steckdosenvorrichtungen 60 versehen sein.

Wie weiterhin insbesondere Figur 3 zu erkennen gibt, kann die Trennvorrichtung 10 gemäß dem Ausführungsbeispiel mit zwei Befestigungsvorrichtungen 20 versehen sein. Dabei ist der Hauptabschnitt 40 mit beiden Befestigungsabschnitten 20 verbunden und kann in der Löserichtung L von diesen getrennt werden.

Der wenigstens eine Befestigungsabschnitt 20 oder die zwei Befestigungsabschnitte 20 können jeweils in einem benachbart zu einer der Seitenwände 122, 124, 126, 128 des Verteilerschranks 100 angeordneten Verkabelungsraum 112 des Verteilerschranks angeordnet werden, vorzugsweise den Verkabelungsraum 112 annähernd ausfüllen.

Die Trennvorrichtung 10 kann gemäß dem Ausführungsbeispiel derart ausgebildet sein, dass der Verteilungsraum 150 von dem Kommunikationsraum 140 derart getrennt ist, dass ein Zugang zu dem Verteilungsraum 150 durch ein Werkzeug verhindert wird. Dieser Zugang wird weiterhin vorzugsweise gemäß der Norm DIN 60529 in ihrer Version vom August 2013 nach IP20 und/oder IP30 verhindert.

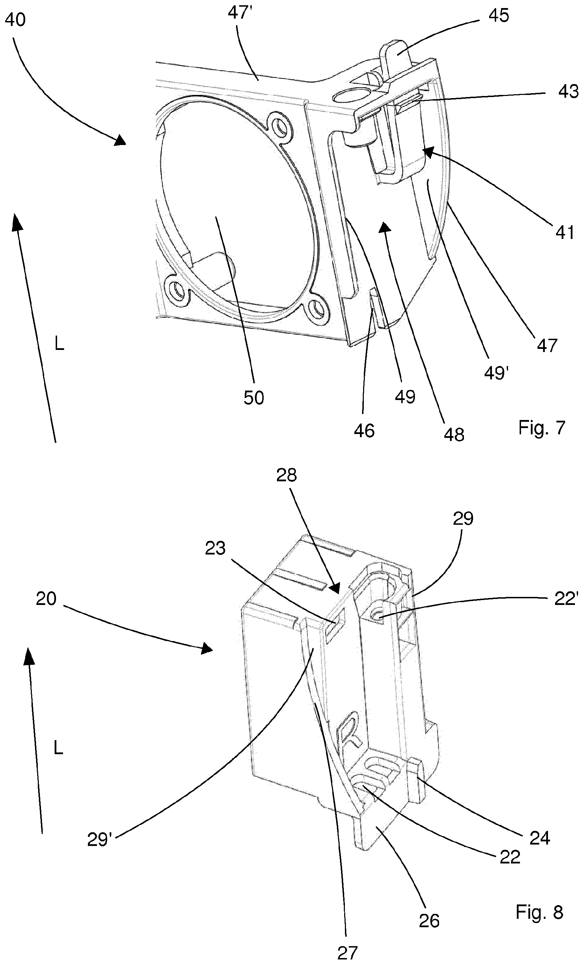

Die Trennvorrichtung 10 kann, wie insbesondere in den Figuren 7 und 8 zu erkennen ist, mit wenigstens einem Führungssteg 24 und wenigstens einem Führungseinschnitt 46 ausgebildet sein. Dabei greift der Führungssteg 24 in dem Führungseinschnitt 46 ein, wenn der Hauptabschnitt 40 mit dem wenigstens einen Befestigungsabschnitt 20 verbunden ist. Gemäß dem Ausführungsbeispiel kann der Führungssteg 24 an dem wenigstens einen Befestigungsabschnitt 20 angeordnet sein und der Führungseinschnitt 46 an dem Hauptabschnitt 40 angeordnet sein. Umgekehrt kann der Führungssteg 24 auch an dem Hauptabschnitt 40 angeordnet sein und der Führungseinschnitt 46 in dem wenigstens einen Befestigungsabschnitt 20 angeordnet sein. Vorzugsweise erstreckt sich der Führungssteg 24 und der Führungseinschnitt 46 im Wesentlichen entlang der Löserichtung L. Weiterhin vorzugsweise ist der Führungseinschnitt 46 zur Rückwand 101 des Verteilerkastens 100 hin offen.

Zur Verbindung des Hauptabschnitts 40 mit dem wenigstens einen Befestigungsabschnitt 20 und zur Führung des Hauptabschnitts 40 entlang des wenigstens einen Befestigungsabschnitts 20 in Löserichtung L kann die Trennvorrichtung 10 mit wenigstens einer Führungsnut 48 und wenigstens einer Führungsfeder 28 versehen sein. Dabei kann die wenigstens eine Führungsnut 48 einem Hauptabschnitt angeordnet sein und die wenigstens eine Führungsfeder 28 an dem Befestigungsabschnitt 20 angeordnet sein. In einer nicht in den Figuren wiedergegebenen Variante kann die Führungsnut 48 an dem Befestigungsabschnitt 20 angeordnet sein und die Führungsfeder 28 an dem Hauptabschnitt 40 angeordnet sein.

Wie insbesondere Figur 8 zu erkennen gibt, kann die Führungsfeder wenigstens eine erste Führungsfläche 29, 29' und die Führungsnut 48 wenigstens eine zweite Führungsfläche 29, 29' umfassen. Vorzugsweise erstreckt sich die erste Führungsfläche 29, 29' und die zweite Führungsfläche 29, 29' im Wesentlichen in einer parallel zur Löserichtung L verlaufenden Richtung. Der Befestigungsabschnitt 20 der Trennvorrichtung 10 gemäß dem Ausführungsbeispiel kann, wie insbesondere in Figur 8 zu erkennen ist, mit zwei parallel verlaufenden ersten Führungsflächen 29, 29' versehen sein. Wie weiterhin insbesondere in Figur 7 zu erkennen ist, kann die Führungsnut 48 zwei zweite Führungsflächen 29, 29' umfassen, die sich gegenüberliegen und im Wesentlichen parallel zueinander verlaufen.

Die Trennvorrichtung 10 nach dem Ausführungsbeispiel kann ferner wenigstens eine erste Führungskante 27 und eine zweite Führungskante 47 aufweisen, wobei die zweite Führungskante 47 an der ersten Führungskante 27 anliegt, wenn der Hauptabschnitt 40 mit dem wenigsten einen Befestigungsabschnitt 20 verbunden ist. Gemäß dem Ausführungsbeispiel kann die erste Führungskante 27 an dem wenigstens einen Befestigungsabschnitt 20 und die zweite Führungskante 47 an dem Hauptabschnitt 40 angeordnet sein. Dabei kann die erste Führungskante 27 gegenüberliegend von der ersten Führungsfläche 29 angeordnet sein.

Die Trennvorrichtung 10 kann ferner eine Plombiereinrichtung 54 zur Plombierung einer Verteilungsraumabdeckung 152 des Verteilerschranks umfassen. Eine solche Verteilungsraumabdeckung 152 ist in den Figuren 1 bis 2F wiedergegeben.

Das Ausführungsbeispiel betrifft ferner einen Verteilerschrank 100 für eine Elektroinstallation umfassend eine Trennvorrichtung 10 nach dem Ausführungsbeispiel. Der Verteilerschrank umfasst ferner eine erste Seitenwand 122, eine gegenüberliegend von der ersten Seitenwand 122 angeordnete zweite Seitenwand 124 und wenigstens einen Hutprofilschienenbefestigungsabschnitt 114, wobei der wenigstens eine Befestigungsabschnitt 20 an dem Hutprofilschienenbefestigungsabschnitt 114 befestigt ist. Die Trennvorrichtung 10 ist derart in dem Verteilerschrank 100 angeordnet, dass sich die Trennvorrichtung 10 von der ersten Seitenwand 122 des Verteilerschranks zu der zweiten Seitenwand 124 des Verteilerschranks erstreckt, um den Verteilungsraum 150 von dem Kommunikationsraum 140 räumlich zu trennen.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Trennvorrichtung für einen Verteilerschrank (100) zur räumlichen und elektrischen Trennung eines Verteilungsraums (150) des Verteilerschranks (100) von einem Kommunikationsraum (140) des Verteilerschranks (100), umfassend
wenigstens einen Befestigungsabschnitt (20), welcher geeignet ist, an einem Abschnitt des Verteilschranks (100) befestigt zu werden, und
einen Hauptabschnitt (40), der mit dem wenigstens einen Befestigungsabschnitt (20) verbunden ist,
wobei die Trennvorrichtung (10) geeignet ist, derart in dem Verteilerschrank (100) angeordnet zu werden, dass sich die Trennvorrichtung (10) von einer ersten Seitenwand (122) des Verteilerschranks (100) zu einer gegenüberliegend von der ersten Seitenwand (122) angeordneten zweiten Seitenwand (124) des Verteilerschranks (100) erstreckt, um den Verteilungsraum (150) von dem Kommunikationsraum (140) räumlich zu trennen,
**dadurch gekennzeichnet, dass** der wenigstens eine Befestigungsabschnitt (20) geeignet ist, in einer parallel zu einer Rückwand (101) und in Richtung einer Seitenwand (122, 124) des Verteilerschranks (100) verlaufenden Montagerichtung in einem benachbart zu einer Seitenwand (122, 124) des Verteilerschranks (100) angeordneten Verkabelungsraum (112) des Verteilerschranks (100) an einem Hutprofilbefestigungsabschnitt (114) des Verteilschranks (100) angeordnet zu werden, wobei der wenigstens eine Befestigungsabschnitt (20) einen Vorsprung umfasst, der in eine Vertiefung (115) des Hutprofilschienenbefestigungsabschnitts (114) einrastbar ist, um den wenigstens einen Befestigungsabschnitt (20) mit dem Hutprofilschienenbefestigungsabschnitt (114) zu verbinden, und dass der Hauptabschnitt (40) lösbar mit dem wenigstens einen Befestigungsabschnitt (20) verbunden ist.

2. Trennvorrichtung nach Anspruch 1, **dadurch gekennzeichnet, dass** der Hauptabschnitt (40) mit dem wenigstens einen Befestigungsabschnitt (20) mittels einer formschlüssigen und/oder kraftschlüssigen Verbindung verbunden ist.

3. Trennvorrichtung nach einem der Ansprüche 1 oder 2, **dadurch gekennzeichnet, dass** der der Hauptabschnitt (40) mit dem wenigstens einen Befestigungsabschnitt (20) mittels einer Clipsverbindung (42) und/oder Schraubverbindung (44) verbunden ist.

4. Trennvorrichtung nach einem der Ansprüche 1 bis 3, **dadurch gekennzeichnet, dass** der Hauptabschnitt (40) zur elektrischen Versorgung eines in dem Kommunikationsraum (140) angeordneten elektrischen Geräts wenigstens eine Steckdosenvorrichtung (60) umfasst, wobei vorzugsweise die Steckdosenvorrichtung (60) von dem Kommunikationsraum (140) her zugänglich ist.

5. Trennvorrichtung nach einem der Ansprüche 1 bis 4, **dadurch gekennzeichnet, dass** der Hauptabschnitt (40) in einer annähernd quer zu einer Rückwand (101) des Verteilerschranks (100) verlaufenden Löserichtung (L) von dem wenigstens einen Befestigungsabschnitt (20) lösbar ist.

6. Trennvorrichtung nach einem der Ansprüche 1 bis 5, **dadurch gekennzeichnet, dass** die Trennvorrichtung (10) derart eine Trennung des Verteilungsraums (150) von dem Kommunikationsraum (140) ermöglicht, dass ein Zugang des Verteilungsraums (150) durch ein Werkzeug verhindert wird.

7. Trennvorrichtung nach einem der Ansprüche 1 bis 6, **dadurch gekennzeichnet, dass** der wenigstens eine Befestigungsabschnitt (20) eine Öffnung (22) aufweist, in welche eine mit einer Gewindebohrung (117) des Hutprofilschienenbefestigungsabschnitts (114) verbundene Schraube (80) angeordnet werden kann, um den wenigstens einen Befestigungsabschnitt (20) mit dem Hutprofilschienenbefestigungsabschnitt (114) zu verbinden, vorzugsweise form- und kraftschlüssig zu verbinden.

8. Trennvorrichtung nach einem der Ansprüche 1 bis 7, **gekennzeichnet durch** wenigstens einen Führungssteg (24) und wenigstens einen Führungseinschnitt (46), in welchem der Führungssteg (24) angeordnet ist, wobei entweder der Führungssteg (24) an dem wenigstens einen Befestigungsabschnitt (20) und der Führungseinschnitt (46) an dem Hauptabschnitt (40) oder der Führungseinschnitt (46) an dem wenigstens einen Befestigungsabschnitt (20) und der Führungssteg (24) an dem Hauptabschnitt (40) angeordnet ist.

9. Trennvorrichtung nach einem der Ansprüche 1 bis 8, **dadurch gekennzeichnet, dass** der wenigstens eine Befestigungsabschnitt (20) einen Anschlagabschnitt (26) umfasst, der an einer sich im Wesentlichen quer zu einer Rückwand (101) des Verteilerschranks (100) erstreckenden Wandung (119) des Hutprofilschienenbefestigungsabschnitts (114) anlegbar ist.

10. Trennvorrichtung nach einem der Ansprüche 1 bis 9, **gekennzeichnet durch** wenigstens eine Führungsnut (48) und wenigstens eine Führungsfeder (28), welche in der Führungsnut (48) angeordnet ist, wobei entweder die Führungsnut (48) an dem wenigstens einen Befestigungsabschnitt (20) und die Führungsfeder (28) an dem Hauptabschnitt (40) oder die Führungsfeder (28) an dem wenigstens einen Befestigungsabschnitt (20) und die Führungsnut (48) an dem Hauptabschnitt (40) angeordnet ist.

11. Trennvorrichtung nach einer Kombination der Ansprüche 5 und 10, **dadurch gekennzeichnet, dass** die Führungsfeder (28) wenigstens eine erste Führungsfläche (29, 29') und die Führungsnut (48) wenigstens eine zweite Führungsfläche (49, 49') umfasst, wobei sich die erste Führungsfläche (29, 29') und die zweite Führungsfläche (49, 49') im Wesentlichen in einer parallel zur Löserichtung (L) verlaufenden Richtung erstrecken.

12. Trennvorrichtung nach einem der Ansprüche 1 bis 11, **gekennzeichnet durch** wenigstens eine erste Führungskante (27) und wenigstens eine zweite Führungskante (47), welche an der ersten Führungskante (27) anliegt, wobei entweder die erste Führungskante (27) an dem wenigstens einen Befestigungsabschnitt (20) und die zweite Führungskante (47) an dem Hauptabschnitt (40) oder die zweite Führungskante (47) an dem wenigstens einen Befestigungsabschnitt (20) und die erste Führungskante (27) an dem Hauptabschnitt (40) angeordnet ist, wobei vorzugsweise die erste Führungskante (27) und die zweite Führungskante (47) gekrümmt, weiterhin vorzugsweise im Wesentlichen parabolisch verlaufen.

13. Trennvorrichtung nach einem der Ansprüche 1 bis 12, **dadurch gekennzeichnet, dass** die Trennvorrichtung (10) im Wesentlichen spiegelsymmetrisch ausgebildet ist.

14. Trennvorrichtung nach einem der Ansprüche 1 bis 13, **dadurch gekennzeichnet, dass** die Trennvorrichtung (10) eine Länge aufweist, die im Wesentlichen einer Breite eines Innenraums (I) des Verteilerschranks (100) gleicht.

15. Trennvorrichtung nach einem der Ansprüche 1 bis 14, **gekennzeichnet durch** eine Plombiereinrichtung zur Plombierung einer Verteilungsraumabdeckung (152) des Verteilerschranks (100).

16. Verteilerschrank für eine Elektroinstallation umfassend eine Trennvorrichtung (10) nach einem der Ansprüche 1 bis 15, eine erste Seitenwand (122), eine gegenüberliegend von der ersten Seitenwand (122) angeordnete zweite Seitenwand (124) und wenigstens einen Hutprofilschienenbefestigungsabschnitt (114), wobei der wenigstens eine Befestigungsabschnitt (20) an dem Hutprofilschienenbefestigungsabschnitt (114) befestigt ist, wobei die Trennvorrichtung (10) derart in dem Verteilerschrank (100) angeordnet ist, dass sich die Trennvorrichtung (10) von der ersten Seitenwand (122) des Verteilerschranks (100) zu der zweiten Seitenwand (124) des Verteilerschranks (100) erstreckt, um den Verteilungsraum (150) von dem Kommunikationsraum (140) räumlich zu trennen.

## Claims

1. Partitioning device for a distribution cabinet (100) for the spatial and electrical partitioning of a distribution space (150) of the distribution cabinet (100) from a communications space (140) of the distribution cabinet (100), comprising
at least one fastening portion (20) which is suitable for being fastened to a portion of the distribution cabinet (100), and
a main portion (40) which is connected to the at least one fastening portion (20),
the partitioning device (10) being suitable for being arranged in the distribution cabinet (100) in such a way that the partitioning device (10) extends from a first side wall (122) of the distribution cabinet (100) to a second side wall (124) of the distribution cabinet (100) arranged so as to lie opposite the first side wall (122), in order to partition the distribution space (150) spatially from the communications space (140),
**characterized in that** the at least one fastening portion (20) is suitable for being arranged, in a mounting direction running parallel to a rear wall (101) and in the direction of a side wall (122, 124) of the distribution cabinet (100), in a cabling space (112) of the distribution cabinet (100) arranged adjacently with respect to a side wall (122, 124) of the distribution cabinet (100) on a top-hat profile fastening portion (114) of the distribution cabinet (100), the at least one fastening portion (20) comprising a projection which can be latched into a depression (115) of the top-hat profile rail fastening portion (114), in order to connect the at least one fastening portion (20) to the top-hat profile rail fastening portion (114), and **in that** the main portion (40) is connected releasably to the at least one fastening portion (20).

2. Partitioning device according to Claim 1, **characterized in that** the main portion (40) is connected to the at least one fastening portion (20) by means of a positively locking and/or non-positive connection.

3. Partitioning device according to either of Claims 1 or 2, **characterized in that** the main portion (40) is connected to the at least one fastening portion (20) by means of a clip connection (42) and/or screw connection (44) .

4. Partitioning device according to one of Claims 1 to 3, **characterized in that** the main portion (40) comprises at least one socket device (60) for the electrical supply of an electrical device arranged in the communications space (140), the socket device (60) preferably being accessible from the communications space (140).

5. Partitioning device according to one of Claims 1 to 4, **characterized in that** the main portion (40) can be released from the at least one fastening portion (20) in a releasing direction (L) which runs approximately transversely with respect to a rear wall (101) of the distribution cabinet (100).

6. Partitioning device according to one of Claims 1 to 5, **characterized in that** the partitioning device (10) makes a partition of the distribution space (150) from the communications space (140) possible in such a way that access of the distribution space (150) by way of a tool is prevented.

7. Partitioning device according to one of Claims 1 to 6, **characterized in that** the at least one fastening portion (20) has an opening (22), in which a screw (80) which is connected to a threaded bore (117) of the top-hat profile rail fastening portion (114) can be arranged, in order to connect, preferably to connect in a positively locking and non-positive manner, the at least one fastening portion (20) to the top-hat rail fastening portion (114).

8. Partitioning device according to one of Claims 1 to 7, **characterized by** at least one guide web (24) and at least one guide indent (46), in which the guide web (24) is arranged, either the guide web (24) being arranged on the at least one fastening portion (20) and the guide indent (46) being arranged on the main portion (40), or the guide indent (46) being arranged on the at least one fastening portion (20) and the guide web (24) being arranged on the main portion (40).

9. Partitioning device according to one of Claims 1 to 8, **characterized in that** the at least one fastening portion (20) comprises a stop portion (26) which can bear against the wall (119), extending substantially transversely with respect to a rear wall (101) of the distribution cabinet (100), of the top-hat profile rail fastening portion (114).

10. Partitioning device according to one of Claims 1 to 9, **characterized by** at least one guide groove (48) and at least one guide tongue (28) which is arranged in the guide groove (48), either the guide groove (48) being arranged on the at least one fastening portion (20) and the guide tongue (28) being arranged on the main portion (40), or the guide tongue (28) being arranged on the at least one fastening portion (20) and the guide groove (48) being arranged on the main portion (40).

11. Partitioning device according to a combination of Claims 5 and 10, **characterized in that** the guide tongue (28) comprises at least one first guide surface (29, 29'), and the guide groove (48) comprises at least one second guide surface (49, 49'), the first guide surface (29, 29') and the second guide surface (49, 49') extending substantially in a direction which runs parallel to the releasing direction (L).

12. Partitioning device according to one of Claims 1 to 11, **characterized by** at least one first guide edge (27) and at least one second guide edge (47) which bears against the first guide edge (27), either the first guide edge (27) being arranged on the at least one fastening portion (20) and the second guide edge (47) being arranged on the main portion (40), or the second guide edge (47) being arranged on the at least one fastening portion (20) and the first guide edge (27) being arranged on the main portion (40), the first guide edge (27) and the second guide edge (47) preferably running in a curved manner, further preferably in a substantially parabolic manner.

13. Partitioning device according to one of Claims 1 to 12, **characterized in that** the partitioning device (10) is of substantially mirror-symmetrical configuration.

14. Partitioning device according to one of Claims 1 to 13, **characterized in that** the partitioning device (10) has a length which is substantially equal to the width of an interior space (I) of the distribution cabinet (100) .

15. Partitioning device according to one of Claims 1 to 14, **characterized by** a sealing device for sealing a distribution space cover (152) of the distribution cabinet (100).

16. Distribution cabinet for an electrical installation comprising a partitioning device (10) according to one of Claims 1 to 15, a first side wall (122), a second side wall (124) arranged opposite the first side wall (122), and at least one top-hat profile rail fastening portion (114), the at least one fastening portion (20) being fastened to the top-hat profile rail fastening portion (114), the partitioning device (10) being arranged in the distribution cabinet (100) in such a way that the partitioning device (10) extends from the first side wall (122) of the distribution cabinet (100) to the second side wall (124) of the distribution cabinet (100), in order to partition the distribution space (150) spatially from the communications space (140).

## Revendications

1. Arrangement de séparation pour une armoire de distribution (100) destiné à la séparation spatiale et électrique d'un espace de distribution (150) de l'armoire de distribution (100) d'un espace de communication (140) de l'armoire de distribution (100), comprenant
au moins une portion de fixation (20), laquelle est adaptée pour être fixée au niveau d'une portion de l'armoire de distribution (100), et
une portion principale (40), laquelle est reliée à l'au moins une portion de fixation (20),
l'arrangement de séparation (10) étant adapté pour être disposé dans l'armoire de distribution (100) de telle sorte que l'arrangement de séparation (10) s'étend depuis une première paroi latérale (122) de l'armoire de distribution (100) jusqu'à une deuxième paroi latérale (124) de l'armoire de distribution (100), disposée à l'opposé de première paroi latérale (122), afin de séparer spatialement l'espace de distribution (150) de l'espace de communication (140),
**caractérisé en ce que** l'au moins une portion de fixation (20) est adaptée pour être disposée dans une direction de montage qui suit un tracé parallèle à une paroi arrière (101) et en direction d'une paroi latérale (122, 124) de l'armoire de distribution (100), dans un espace de câblage (112) de l'armoire de distribution (100) disposé adjacent à une paroi latérale (122, 124) de l'armoire de distribution (100), au niveau d'une portion de fixation à profilé oméga (114) de l'armoire de distribution (100), l'au moins une portion de fixation (20) comportant une partie saillante qui peut être encliquetée dans une cavité (115) de la portion de fixation à rail profilé oméga (114) afin de relier l'au moins une portion de fixation (20) à la portion de fixation à rail profilé oméga (114), et **en ce que** la portion principale (40) est reliée de manière amovible à l'au moins une portion de fixation (20).

2. Arrangement de séparation selon la revendication 1, **caractérisé en ce que** la portion principale (40) est reliée à l'au moins une portion de fixation (20) au moyen d'une liaison par complémentarité de formes et/ou par adhérence.

3. Arrangement de séparation selon l'une des revendications 1 ou 2, **caractérisé en ce que** la portion principale (40) est reliée à l'au moins une portion de fixation (20) au moyen d'une liaison par enclipsage (42) et/ou d'une liaison par vissage (44).

4. Arrangement de séparation selon l'une des revendications 1 à 3, **caractérisé en ce que** la portion principale (40), pour l'alimentation électrique d'un appareil électrique disposé dans l'espace de communication (140), comporte au moins un arrangement à prise électrique (60), l'arrangement à prise électrique (60) étant accessible depuis l'espace de communication (140) .

5. Arrangement de séparation selon l'une des revendications 1 à 4, **caractérisé en ce que** la portion principale (40) peut être détachée de l'au moins une portion de fixation (20) dans une direction de détachement (L) qui suit un tracé approximativement transversal par rapport à une paroi arrière (101) de l'armoire de distribution (100).

6. Arrangement de séparation selon l'une des revendications 1 à 5, **caractérisé en ce que** l'arrangement de séparation (10) rend possible une séparation de l'espace de distribution (150) de l'espace de communication (140) de telle sorte qu'un accès à l'espace de distribution (150) par un outil est empêché.

7. Arrangement de séparation selon l'une des revendications 1 à 6, **caractérisé en ce que** l'au moins une portion de fixation (20) possède une ouverture (22) dans laquelle peut être disposée une vis (80) reliée à un trou taraudé (117) de la portion de fixation à rail profilé oméga (114) afin de relier l'au moins une portion de fixation (20) à la portion de fixation à rail profilé oméga (114), de préférence la relier par complémentarité de formes et par adhérence.

8. Arrangement de séparation selon l'une des revendications 1 à 7, **caractérisé par** au moins une nervure de guidage (24) et au moins une entaille de guidage (46) dans laquelle est disposée la nervure de guidage (24), soit la nervure de guidage (24) étant disposée au niveau de l'au moins une portion de fixation (20) et l'entaille de guidage (46) au niveau de la portion principale (40), soit l'entaille de guidage (46) étant disposée au niveau de l'au moins une portion de fixation (20) et la nervure de guidage (24) au niveau de la portion principale (40).

9. Arrangement de séparation selon l'une des revendications 1 à 8, **caractérisé en ce que** l'au moins une portion de fixation (20) comporte une portion de butée (26) qui peut être appliquée contre une paroi (119) de la portion de fixation à rail profilé oméga (114) qui s'étend sensiblement transversalement par rapport à une paroi arrière (101) de l'armoire de distribution (100).

10. Arrangement de séparation selon l'une des revendications 1 à 9, **caractérisé par** au moins une rainure de guidage (48) et au moins un ressort de guidage (28) qui est disposé dans la rainure de guidage (48), soit la rainure de guidage (48) étant disposée au niveau de l'au moins une portion de fixation (20) et le ressort de guidage (28) au niveau de la portion principale (40), soit le ressort de guidage (28) étant disposée au niveau de l'au moins une portion de fixation (20) et la rainure de guidage (48) au niveau de la portion principale (40).

11. Arrangement de séparation selon une combinaison des revendications 5 et 10, **caractérisé en ce que** le ressort de guidage (28) comporte au moins une première surface de guidage (29, 29') et la rainure de guidage (48) au moins une deuxième surface de guidage (49, 49'), la première surface de guidage (29, 29') et la deuxième surface de guidage (49, 49') s'étendant sensiblement dans une direction parallèle à la direction de détachement (L).

12. Arrangement de séparation selon l'une des revendications 1 à 11, **caractérisé par** au moins une première arête de guidage (27) et au moins une deuxième arête de guidage (47), laquelle repose contre la première arête de guidage (27), soit la première arête de guidage (27) étant disposée au niveau de l'au moins une portion de fixation (20) et la deuxième arête de guidage (47) au niveau de la portion principale (40), soit la deuxième arête de guidage (47) étant disposée au niveau de l'au moins une portion de fixation (20) et la première arête de guidage (27) au niveau de la portion principale (40), la première arête de guidage (27) et la deuxième arête de guidage (47) suivant de préférence un tracé curviligne, en plus préférablement sensiblement parabolique.

13. Arrangement de séparation selon l'une des revendications 1 à 12, **caractérisé en ce que** l'arrangement de séparation (10) possède une configuration sensiblement à symétrie en miroir.

14. Arrangement de séparation selon l'une des revendications 1 à 13, **caractérisé en ce que** l'arrangement de séparation (10) présente une longueur qui est sensiblement égale à une largeur d'un espace intérieur (I) de l'armoire de distribution (100).

15. Arrangement de séparation selon l'une des revendications 1 à 14, **caractérisé par** un dispositif de scellement destiné à sceller un capotage d'espace de distribution (152) de l'armoire de distribution (100).

16. Armoire de distribution pour une installation électrique comprenant un arrangement de séparation (10) selon l'une des revendications 1 à 15, une première paroi latérale (122), une deuxième paroi latérale (124) disposée à l'opposé de première paroi latérale (122) et au moins une portion de fixation à rail profilé oméga (114), l'au moins une portion de fixation (20) étant fixée à la portion de fixation à rail profilé oméga (114), l'arrangement de séparation (10) étant disposé dans l'armoire de distribution (100) de telle sorte que l'arrangement de séparation (10) s'étend depuis une première paroi latérale (122) de l'armoire de distribution (100) jusqu'à la deuxième paroi latérale (124) de l'armoire de distribution (100), disposée à l'opposé de première paroi latérale (122), afin de séparer spatialement l'espace de distribution (150) de l'espace de communication (140).
